# EUROPEAN PATENT APPLICATION

(11) **EP 4 659 886 A1**
(43) Date of publication of application: **10.12.2025**
(21) Application number: 25176364.5
(22) Date of filing: 14.05.2025
(51) Int. Cl.: B23K 9/095, B23K 26/03, B23K 31/12

(54) **VISION SENSOR SYSTEM**

(30) Priority: 24.05.2024 KR 20240067539
(71) Applicant: Otos Wing Co., Ltd., Seoul 08521 (KR)
(72) Inventor: HUH, Moon Young, 08521 Seoul (KR); HUH, Sung Won, 06084 Seoul (KR)
(74) Representative: Meissner Bolte Partnerschaft mbB

(57) **Abstract**

A vision sensor system is provided. The vision sensor system may include a laser irradiation unit configured to irradiate a laser along an imaginary welding path set on a target object, and a camera unit configured to obtain a plurality of image frames for the target object based on the laser and generate one or more merged images, based on two or more image frames selected from among the plurality of image frames in accordance with a set criterion.

## Description

### BACKGROUND

### 1. Field

The disclosure relates to a vision sensor system which generates a high-definition image during a welding process.

### 2. Description of the Related Art

A vision sensor irradiates a laser line while moving along a welding area during a welding process, captures an image of the welding area along the laser line, and provides the captured image, allowing welding defects to be identified based on the image. In the vision sensor, a blackening filter is arranged in front of a camera, allowing a laser line to be identified in an image obtained through the camera.

However, because welding arc is excessively bright, it is difficult to identify a welding bead and a surrounding environment other than the laser line in the image obtained by the camera of the vision sensor.

### SUMMARY

An embodiment provides a vision sensor system which obtains an image by capturing an image of a welding area where a laser line is irradiated along a welding path through a camera unit including a shading cartridge structure which controls light entering a camera, and transmits the captured image to an external device, allowing a welding bead, a welding arc, a surrounding environment, etc. to be identified together with the laser line through the image.

According to an embodiment, in case that a welding arc is not detected for a set period of time in an image obtained by a camera, a state of a welder may be identified by providing welding arc non-detection information to an external device.

According to an embodiment, whether a welding defect has occurred in a target object is determined based on an image obtained by a camera and is provided to an external device, allowing a welding defect to be recognized in real time, and, in case that the external device is a welding robot, a welding defect in a target object is minimized by stopping a welding process or changing welding process conditions, based on whether the welding defect has occurred in the target object.

According to an embodiment, a high-definition welding image capable of clearly showing a welding surrounding environment is generated and provided by processing an image obtained by a camera, based on high dynamic range (HDR) technology.

According to an embodiment, unnecessary light reflected from a camera is prevented from entering the camera again by adjusting a slope of a shading cartridge structure of a camera unit, which limits a ghost phenomenon that may occur due to unnecessary light when generating a welding image.

According to an embodiment, a blackening filter and a neutral density filter are provided inside a camera unit to control a blackening density or a neutral density according to the presence or absence of welding light or the intensity of welding light, and thus, a welding image in which a certain amount of welding light is shielded is provided without processing a separately captured welding image.

The problems to be solved by the disclosure are not limited to those described above, and other problems and advantages of the disclosure that are not described herein will be understood from the following description and will be more clearly understood from embodiments. Furthermore, it will be appreciated that the problems to be solved by the disclosure and the advantages may be realized by the means indicated in the claims and combinations thereof.

A vision sensor system according to an embodiment may include a laser irradiation unit configured to irradiate a laser along an imaginary welding path set on a target object, and a camera unit configured to obtain a plurality of image frames for the target object based on the laser and generate one or more merged images, based on two or more image frames selected from among the plurality of image frames in accordance with a set criterion.

The vision sensor system may further include a control unit configured to determine whether a welding defect has occurred in the target object, based on the merged image, and output a determination result.

The merged image may include the laser moving along the imaginary welding path, and the control unit may be further configured to detect information about a bead formed on the target object from the merged image, based on a shape of the laser according to a shape of the bead, and determine whether a welding defect has occurred in the target object, based on a result of analyzing the information about the bead.

The camera unit may include a shading unit having a shading cartridge structure arranged between a camera and a light source and configured to control light entering the camera, a capturing unit having the camera configured to obtain the plurality of image frames, and a processor configured to generate a plurality of merged preprocessed images, based on two or more image frames selected from among the plurality of image frames in accordance with the set criterion, and generate the one or more merged images by synthesizing the plurality of merged preprocessed images.

The shading cartridge structure may include a blackening filter and an anti-reflection coating layer arranged on at least one surface of the blackening filter.

The shading cartridge structure may further include a neutral density filter arranged in front of the blackening filter.

The shading cartridge structure may be arranged so that an imaginary line perpendicular to a main surface of the shading cartridge structure crosses an imaginary line which connects a lens of the camera and the light source.

In addition, other methods and other systems for implementing the disclosure and computer-readable recording media storing a computer program for performing the methods may be further provided.

Other aspects, features, and advantages of the disclosure will become better understood through the accompanying drawings, the appended claims, and the detailed description.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a diagram illustrating a network environment of a vision sensor system according to an embodiment;
FIG. 2 is a diagram illustrating a configuration example of a vision sensor system according to an embodiment;
FIG. 3 is a diagram illustrating a configuration example of a camera unit in a vision sensor system according to an embodiment;
FIG. 4 is a conceptual diagram illustrating a camera unit in a vision sensor system according to an embodiment;
FIGS. 5 to 7 are conceptual diagrams illustrating a configuration example of a camera unit according to an embodiment;
FIG. 8 is a conceptual diagram illustrating another example of a camera unit in a vision sensor system according to an embodiment;
FIG. 9 is a conceptual diagram illustrating another example of a camera unit in a vision sensor system according to an embodiment;
FIG. 10 is a block diagram for describing a method of controlling a filter unit of a camera unit in a vision sensor system, according to an embodiment;
FIG. 11 is a diagram for describing an example of generating a merged image in a camera unit in a vision sensor system according to an embodiment;
FIG. 12 is a diagram for describing another example of generating a merged image in a camera unit in a vision sensor system according to an embodiment;
FIG. 13 is an exploded view of a camera unit in a vision sensor system according to an embodiment;
FIGS. 14 and 15 are diagrams for describing an example of generating an image based on a laser line in a vision sensor system according to an embodiment;
FIGS. 16 and 17 are diagrams for describing an example of generating another image based on a laser line in a vision sensor system according to an embodiment; and
FIG. 18 is a diagram illustrating another example of a vision sensor system according to an embodiment.

### DETAILED DESCRIPTION

The advantages and features of the disclosure, and methods of achieving them will be clarified with reference to embodiments described below in detail with reference to the accompanying drawings. However, the disclosure is not limited to the embodiments presented below and may be implemented in various different forms. Rather, it will be understood that the disclosure includes all modifications, equivalents, and substitutes falling within the concept and technical scope of the disclosure. The embodiments presented below are provided so that the disclosure will be thorough and complete and will fully convey the concept of the disclosure to those of ordinary skill in the art. In describing the disclosure, when the detailed description of the relevant known technology is determined to obscure the gist of the disclosure, the detailed description thereof may be omitted.

The terms as used herein are only used to describe particular embodiments and are not intended to limit the disclosure. The singular forms as used herein are intended to include the plural forms as well unless the context clearly indicates otherwise. The terms "comprise," "include," or "have" as used in the present application are inclusive and therefore specify the presence of one or more stated features, integers, steps, operations, elements, components, or any combination thereof, but do not preclude the presence or addition of one or more other features, integers, steps, operations, elements, components, or any combination thereof. While the terms such as "first" and "second" may be used to describe various elements, the elements should not be limited by the terms. These terms are only used to distinguish one element from another.

In addition, the term "unit" as used herein may refer to a hardware component, such as a processor or a circuit, and/or a software component which is executed by a hardware component, such as a processor.

Hereinafter, embodiments will be described in detail with reference to the accompanying drawings. When describing the embodiments with reference to the accompanying drawings, the same or corresponding elements are denoted by the same reference numerals and redundant descriptions thereof are omitted.

In the following embodiments, the terms "first," "second," etc. are not used in a restrictive sense and are used to distinguish one element from another.

The singular forms as used herein are intended to include the plural forms as well unless the context clearly indicates otherwise.

It will be understood that the terms "include" and/or "comprise" used herein specify the presence of stated features or elements, but do not preclude the presence or addition of one or more other features or elements.

When a certain embodiment is implemented differently, a specific process sequence may be performed differently from a sequence described herein. For example, two consecutively described processes may be performed substantially at the same time or performed in an order opposite to the stated order.

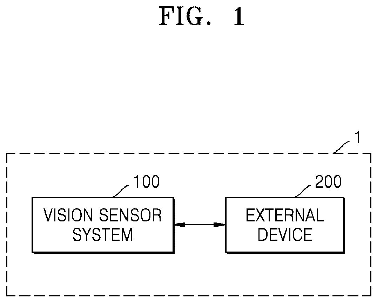

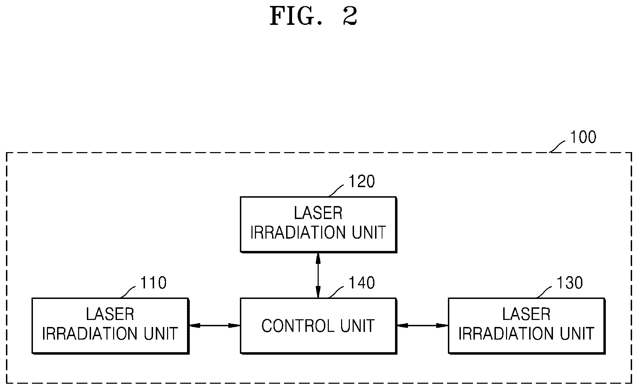

FIG. 1 is a diagram illustrating a network environment of a vision sensor system according to an embodiment, and FIG. 2 is a diagram illustrating a configuration example of a vision sensor system according to an embodiment.

Referring to FIG. 1, a network environment 1 of a vision sensor system according to an embodiment may include a vision sensor system 100 and an external device 200.

The vision sensor system 100 according to an embodiment may generate a high-definition image of a welding area and transmit the high-definition image to the external device 200, allowing a state of a welding site to be easily identified.

In an embodiment, the vision sensor system 100 may irradiate a laser while moving along an imaginary welding path for a target object (e.g., aluminum) within a welding area, and obtain image frames for the target object, based on the laser.

The vision sensor system 100 may receive a feedback signal generated based on the high-definition image and operate according to the feedback signal. The feedback signal may be, for example, a signal related to the control of the vision sensor system 100, such as a capturing condition of a camera inside the vision sensor system 100, the operation or non-operation of the vision sensor system 100, and a moving speed.

The external device 200 may be, for example, a welding robot, a welding monitoring device (e.g., a personal computer (PC)), a mobile terminal (e.g., a smartphone), a welding torch, or welding goggles, but the disclosure is not limited thereto. The external device 200 may output the high-definition image received from the vision sensor system 100. In case that the feedback signal generated based on the high-definition image is input, the external device 200 may control the vision sensor system 100 by transmitting the feedback signal to the vision sensor system 100.

The vision sensor system 100 according to an embodiment may include a laser irradiation unit 110, a camera unit 120, a communication unit 130, and a control unit 140.

The laser irradiation unit 110 may be a laser stripe projector and may irradiate a laser along an imaginary welding path set for a target object within a welding area. The laser may be, for example, in the form of a line, but the disclosure is not limited thereto, and the laser may be in other forms.

The camera unit 120 may include at least one camera. The camera unit 120 may obtain a plurality of image frames for the target object, based on the laser, and generate one or more merged images based on two or more image frames selected from among the plurality of image frames in accordance with a set criterion.

In an embodiment, the camera unit 120 may obtain image frames by capturing an image of a welded portion of the target object (e.g., an upper surface of the target object) while tracking the laser irradiated along the imaginary welding path. In this case, the camera unit 120 may obtain image frames, including the laser irradiated onto the target object, through a camera arranged at the rear of a shading cartridge structure, by adjusting a blackening density (a neutral density) of a blackening filter (or a neutral density filter) included in the shading cartridge structure.

The communication unit 130 is configured to communicate with various external devices 200 in accordance with various types of wired and wireless communication schemes. The communication unit 130 may include at least one of a Wireless Fidelity (Wi-Fi) chip, a Bluetooth chip, a wireless communication chip, or a near field communication (NFC) chip. In particular, in case that the Wi-Fi chip or the Bluetooth chip is used, various pieces of connection information, such as a service set identifier (SSID) and a session key, may be transmitted and received, communication may be established by using the various pieces of connection information, and then, various pieces of information may be transmitted and received. The wireless communication chip refers to a chip which performs communication in accordance with various communication standards, such as Institute of Electrical and Electronics Engineers (IEEE), Zigbee, 3rd Generation (3G), 3rd Generation Partnership Project (3GPP), or Long Term Evolution (LTE). The NFC chip refers to a chip which operates in an NFC scheme using a 13.56 MHz band among various RF-ID frequency bands, such as 135 kHz, 13.56 MHz, 433 MHz, 860 MHz to 960 MHz, or 2.45 GHz.

The control unit 140 may include at least one control processor. The control unit 140 may transmit a high-definition image for the welding area (e.g., a merged image generated from a plurality of image frames), which is generated by the camera unit 120, to the external device 200 through the communication unit 130, which allows the user to identify, from the high-definition image, information about not only the laser but also a shape of a welding bead, a welding arc, and a surrounding environment other than an area adjacent to welding light. In case that the welding arc is not detected in a set number of high-definition images (or high-definition images during a set period of time), the control unit 140 may identify a state of a welder by transmitting welding arc non-detection information to the external device 200.

In an embodiment, the control unit 140 may determine whether a welding defect has occurred in the target object, based on the high-definition merged image (or the image frame) generated by the camera unit 120, and transmit, to the external device 200, information about whether a welding defect has occurred in the target object, thereby providing information about whether a welding defect has occurred in real time even during a welding process.

The control unit 140 may detect information about the bead from the merged image (or the image frame) including the laser moving along the imaginary welding path, based on the shape of the laser according to the shape of the bead formed on the target object, and determine whether a welding defect has occurred in the target object, based on a result of analyzing the information about the bead.

The control unit 140 may detect the size of the bead formed on the target object (e.g., the top width and top circumference of the bead) from the merged image (or the image frame), and determine whether a welding defect has occurred, based on a result of comparing the detected size of the bead with a set size range. For example, in case that the detected size of the bead is out of the set size range, the control unit 140 may determine that a welding defect has occurred. In this case, the control unit 140 may detect the bead and the laser from the merged image (or the image frame) and detect the size of the bead based on the shape of the laser corresponding to the bead.

In some embodiments, the control unit 140 may detect the line of the bead formed on the target object from the merged image (or the image frame) and determine whether a welding defect has occurred, based on a result of comparing the detected line of the bead with a set bead line range. For example, in case that the detected line of the bead is out of the set bead line range, the control unit 140 may determine that a welding defect has occurred.

In an embodiment, the control unit 140 may transmit the presence or absence of a welding defect to a welding robot as the external device 200, and the welding robot may stop a welding process in case that a welding defect has occurred. The control unit 140 may further transmit bead information about at least one of the size of the bead or the line of the bead together with the presence or absence of a welding defect, and change welding process conditions based on the bead information without stopping the welding process in the welding robot, thereby minimizing a welding defect in the target object. The welding process conditions may include, for example, output intensity of welding light, a welding speed, a wavelength type, a position and an angle at which welding light is irradiated, a moving direction at the position, a moving distance, etc.

In an embodiment, in case that the control unit 140 determines that a welding defect has occurred, based on the detected line of the bead, the control unit 140 may generate a bead guide line based on the detected line of the bead and the set bead line range and further transmit the bead guide line to the welding robot so that the welding process is performed along the bead guide line, thereby preventing a welding defect. Whether to stop the welding process in the welding robot or whether to change the welding process conditions in case that a welding defect has occurred may be preset.

In some embodiments, the control unit 140 may transmit information detected by a sensor unit to the external device 200 through the communication unit 130.

In an embodiment, the information transmitted to the external device 200 may be output in various forms through, for example, an output unit (not shown) (e.g., a speaker, a display, etc.) inside the vision sensor system 100.

In an embodiment, the communication unit 130 and the control unit 140 may be positioned outside the camera unit 120, but the disclosure is not limited thereto, and at least one of the communication unit 130 or the control unit 140 may be included inside the camera unit 120.

In an embodiment, the camera unit 120 may be formed as a single device separately from the laser irradiation unit 110, but the disclosure is not limited thereto, and the camera unit 120 may be formed to include the laser irradiation unit 110.

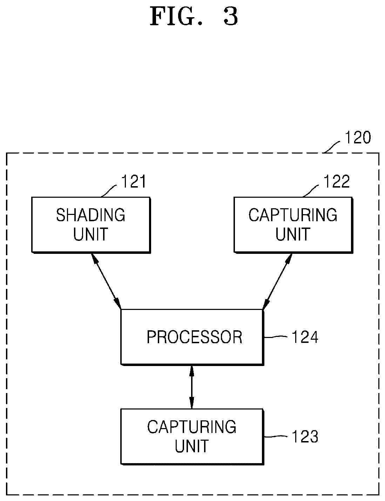

FIG. 3 is a diagram illustrating a configuration example of the camera unit 120 in the vision sensor system according to an embodiment.

Referring to FIG. 3, the camera unit 120 in the vision sensor system according to an embodiment may include a shading unit 121, a capturing unit 122, a sensor unit 123, and a processor 124.

The shading unit 121 may have a shading cartridge structure arranged between a camera and a light source and configured to control light which enters the camera. The shading cartridge structure may include a blackening filter and an anti-reflection coating layer arranged on at least one surface of the blackening filter. In an embodiment, the shading cartridge structure may further include a neutral density filter arranged in front of the blackening filter. The blackening density (or the neutral density) of the blackening filter (or the neutral density filter) may be adjusted so that the laser irradiated onto the target object within the welding area may be included in the image frame obtained through the camera.

Because the shading cartridge structure is arranged between the camera and the light source so as to have a slope, unnecessary light reflected from the lens inside the camera by strong light may be reduced, and thus, a ghost phenomenon may be limited. The slope of the shading cartridge structure may be fixed at a specified angle, but the disclosure is not limited thereto, and the slope of the shading cartridge structure may be adjusted by the processor 124.

The shading unit 121 may further include a sensor filter (not shown). The sensor filter may be formed integrally with the shading cartridge structure, or may be formed separately from the shading cartridge structure. The sensor filter may be arranged on an imaginary line which connects the light source to the sensor unit 123 (e.g., an illuminance sensor), which enables control of light entering the sensor unit.

The capturing unit 122 may include a camera which obtains a plurality of image frames for the welding area (i.e., a plurality of welding image frames). The camera may obtain a plurality of image frames based on light having passed through the shading cartridge structure (or the shading unit).

In an embodiment, the capturing unit 122 may further include a thermal imaging camera and may obtain a thermal image through the thermal imaging camera.

The capturing unit 122 may include one camera, but the disclosure is not limited thereto, and the capturing unit 112 may include two or more cameras.

The capturing unit 122 may repeatedly capture an image of a work area under different capturing conditions, including a shutter speed, international organization for standardization (ISO) sensitivity, and a gain value of the camera, under the control by the processor 124.

The sensor unit 123 may include a plurality of sensor modules configured to detect various pieces of information about the work area and obtain various pieces of information. The sensor unit 123 may include an illuminance sensor which detects the intensity of light within the work area (e.g., intensity of welding light, intensity of ambient light, etc.). The sensor unit 123 may further include, in addition to the illuminance sensor, various types of sensors such as a proximity sensor, a noise sensor, a video sensor, an ultrasonic sensor, and a radio frequency (RF) sensor, and may detect various changes related to a welding work environment.

In an embodiment, the sensor unit 123 may detect, for example, welding information. The welding information may include, for example, a welding temperature, a welding direction, a welding slope, a welding speed, and a gap between a workpiece and a welding torch with respect to real-time welding work.

As the welding light is detected through the sensor unit 123, the processor 124 may control at least one of the blackening filter, the neutral density filter, or the sensor filter, which is included in the shading cartridge structure, based on the intensity of the welding light.

In an embodiment, the processor 124 may control the blackening density (or the neutral density) so that the laser irradiated onto the target object within the welding area may be included in the image frame obtained through the camera. The processor 124 may allow the camera to recognize the laser irradiated onto the target object so that the shape of the laser may be identified in the image frame obtained through the camera.

The processor 124 may generate one or more merged images by synthesizing a plurality of image frames obtained through the camera, and provide the one or more merged images to the control unit (140 of FIG. 2) of the vision sensor system as the high-definition image. A high-definition image generated by using high dynamic range (HDR) technology may be transmitted to the external device 200 through the communication unit (130 of FIG. 2) of the vision sensor system under the control by the control unit of the vision sensor system. Accordingly, the welding state (e.g., information about the shape of the welding bead, the welding arc, and the surrounding environment other than the area adjacent to the welding light) may be accurately identified through the high-definition image, and feedback thereon may be provided.

In an embodiment, the processor 124 may generate a plurality of merged preprocessed images based on two or more image frames selected in accordance with a set criterion from among the plurality of image frames obtained at set intervals, and generate one or more merged images by synthesizing the plurality of merged preprocessed images. The two or more image frames may be consecutive image frames in time-series order. The processor 124 may generate the plurality of merged preprocessed images in parallel. The set criterion may include, for example, a specified number of image frames, selection of image frames whose pixel difference between other image frames (e.g., previous image frames) falls within a set pixel difference range, a change in the number of image frames based on the capturing conditions, and the like.

In an embodiment, the processor 124 may generate a first merged preprocessed image based on two or more first image frames selected from among the plurality of image frames in accordance with a set criterion, and generate a second merged preprocessed image based on two or more second image frames selected from among the plurality of image frames in accordance with a set criterion. The two or more first image frames and the two or more second image frames may include a set number or more of identical image frames (or a set number or more of different image frames). The processor 124 may generate a merged image by synthesizing the first merged preprocessed image and the second merged preprocessed image.

In an embodiment, the camera of the capturing unit 122 may capture the image of the welding area to obtain the image frame including the laser irradiated onto the target object within the welding area, but the disclosure is not limited thereto. For example, the camera may obtain a normal image frame not including a laser and a laser image frame including a laser according to the control by the processor 124 (e.g., by varying the capturing conditions, the shade, the blackening density, the neutral density, etc.). The normal image frame and the laser image frame may be obtained by one camera, but the disclosure is not limited thereto, and the normal image frame and the laser image frame may be obtained by different cameras.

When the normal image frame and the laser image frame are generated by the camera, the processor 124 may generate an image frame including a laser by synthesizing the normal image frame and the laser image frame.

The processor 124 may operate in a first capturing mode which generates an image frame including a laser, based on an image capturing mode input from the external device (or the user) through the communication unit (130 of FIG. 2), or may operate in a second capturing mode which generates a normal image frame not including a laser and a laser image frame including a laser and generate an image frame including a laser by synthesizing the normal image frame and the laser image frame. In some embodiments, the processor 124 may maintain or delete the laser included in the image frame, based on whether the laser input from the external device (or the user) through the communication unit 130 is observed.

The processor 124 may provide the information (e.g., the welding information) detected by the sensor unit 123 to the control unit (140 of FIG. 2) of the vision sensor system. The information detected by the sensor unit 123 may be transmitted to the external device 200 through the communication unit (130 of FIG. 2) of the vision sensor system under the control by the control unit of the vision sensor system, thereby allowing the situation regarding the welding area to be identified.

In an embodiment, the processor 124 may detect, for example, the welding temperature through the sensor unit 123, but the disclosure is not limited thereto.

In an embodiment, in case that the capturing unit 122 includes a thermal imaging camera, the processor 124 may obtain a temperature image of a work by synthesizing a thermal image obtained through the thermal imaging camera and an image of a welding site, and identify a welding temperature based on the temperature image.

The processor 124 may transmit the welding temperature detected by the sensor unit 123 and the welding temperature identified based on the temperature image to the external device 200 through the communication unit (130 of FIG. 2), but may also calculate an average of the welding temperatures and transmit the average of the welding temperatures to the external device 200 through the communication unit (130 of FIG. 2). In this case, the processor 124 may identify whether the welding temperature exceeds a set temperature range, a level corresponding to the welding temperature, etc., and may transmit the identified information to the external device 200 through the communication unit (130 of FIG. 2).

When the difference between the welding temperature detected by the sensor unit 123 and the welding temperature identified based on the temperature image is greater than or equal to a set value, the processor 124 may generate notification information (e.g., an abnormality message) and transmit the notification information to the external device 200 through the communication unit (130 of FIG. 2).

The processor 124 may control the overall operation of the camera unit 120. The processor 124 may execute programs stored in a memory (not shown) to control the shading unit 121, the capturing unit 122, the sensor unit 123, and the like so as to the operation of the camera unit 120.

The processor 124 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electrical units for performing functions.

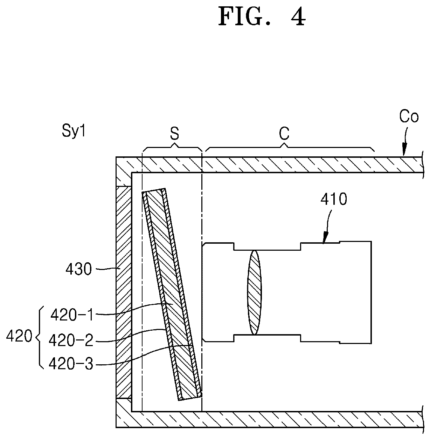

FIG. 4 is a conceptual diagram illustrating a camera unit in a vision sensor system according to an embodiment.

Referring to FIG. 4, a camera unit Sy1 according to an embodiment may include a capturing unit C including a camera configured to obtain an image frame by capturing an image of a welding area, and a shading unit S including a shading cartridge structure 420 arranged between a camera 410 and a welding light source and configured to control welding light entering the capturing unit C (or the camera 410).

The camera unit Sy1 according to an embodiment may be implemented in the form of a camera, a camera unit, a camera module, a camera device, or the like, and such examples are not particularly limited.

For example, as in the structure described above, by arranging the shading unit S between the capturing unit C and the welding light source, an amount of welding light entering the capturing unit C may be controlled so that a clear welding image is captured.

The capturing unit C according to an embodiment may further include additional components for fixing and/or operating the camera 410, such as a camera fixing unit (to which a reference symbol is not assigned) for fixing the camera 410, and such components are not particularly limited.

The shading unit S according to an embodiment may further include additional components for fixing the shading cartridge structure 420, such as a structure fixing unit (to which a reference symbol is not assigned) for fixing the shading cartridge structure 420, and such components are not particularly limited.

The shading cartridge structure 420 according to an embodiment may perform a function of shading welding light generated during welding work. For example, as an optional embodiment, the shading cartridge structure 420 may adjust a shade based on welding light information detected by a sensor unit (not shown). As another optional embodiment, the shade may be adjusted based on welding light information detected by a separate photo sensor (not shown).

The shading cartridge structure 420 according to an embodiment may include, for example, a liquid crystal display (LCD) panel 420-1, whose blackening density is adjustable according to the alignment direction of liquid crystals, as a blackening filter. The LCD panel 420-1 may be implemented as various types of panels or LCD panels, for example, a vertical align (VA) LCD panel, a twist nematic (TN) LCD panel, an in-plane switching (IPS) LCD panel, or the like. The disclosure is not limited to the above examples, and any LCD panel should be interpreted as falling within the scope of the disclosure as long as the LCD panel may be easily selected by those of ordinary skill in the art.

The shade (or the blackening density) of the shading cartridge structure 420 according to an embodiment may be automatically adjusted according to the brightness of the welding light. As described above, in case that the shade of the shading cartridge structure 420 is automatically adjusted according to the brightness of the welding light, the sensor unit (not shown) may be used.

The sensor unit (not shown) according to an embodiment may obtain welding light information by detecting the intensity of welding light and convert information about the intensity of the welding light, which is included in the welding light information, into a certain electrical signal. In case that the certain electrical signal is transmitted to a processor (not shown), the processor (not shown) may control the shade (or the blackening density) based on the intensity of the welding light.

The shading cartridge structure 420 according to an embodiment may change the shade of the LCD panel 420-1 in real time so as to correspond to the intensity of light generated from a welding surface at a welding work site, and the capturing unit C may capture a welding image in which a certain amount of welding light is shielded by the shading cartridge structure 420 installed at the front side.

Referring again to FIG. 4, the camera unit Sy1 according to an embodiment may further include a cover part Co which is arranged in the outer area of the shading cartridge structure 420 and covers the outside of the shading cartridge structure 420. As an optional embodiment, the cover part Co may cover the shading cartridge structure 420 and the capturing unit C together.

The cover part Co according to an embodiment may include a light-transmitting member (to which a reference numeral is not assigned), at least a portion of which is made of a light-transmitting material. The welding light may be transmitted through the light-transmitting member (to which a reference numeral is not assigned) and the shading cartridge structure 420, ultimately allowing the welding image to be captured by the capturing unit C.

The light-transmitting member (to which a reference numeral is not assigned) according to an embodiment may include a cover plate 430 which is arranged on the front side of the shading cartridge structure 420 and protects the shading cartridge structure 420. The cover plate 430 may include a resin material capable of transmitting light, for example, polycarbonate (PC) or acrylic, and may be formed through injection molding or the like, but the disclosure is not limited to the above examples.

The shading cartridge structure 420 according to an embodiment may include the LCD panel 420-1 and an anti-reflection coating layer arranged on at least one surface of the LCD panel 420-1. As an optional embodiment, the anti-reflection coating layer may include a first coating layer 420-2 and a second coating layer 420-3, which are respectively arranged on a surface and an opposite surface of the LCD panel 420-1.

The camera unit Sy1 according to an embodiment may further include a neutral density filter which is arranged in the shading cartridge structure 420 and reduces an amount of light together with the LCD panel 420-1 as the blackening filter. The neutral density filter may be arranged in front of the blackening filter, but the disclosure is not limited thereto.

The camera unit Sy1 according to an embodiment may receive a setting value for at least one item among a shade, sensor sensitivity, and a zoom function through a setting menu of the camera unit, may set the corresponding item based on the setting value, and may output a setting state.

For example, in case that a first setting value corresponding to any one of first to tenth levels with respect to the shade is input, the processor of the camera unit may adjust the shade (or transmittance) of the shading cartridge structure 420 based on the first setting value. In this case, the adjustment range of the shade may be, for example, a transmittance range of 15 % to 0.003 %.

For example, in case that a second setting value corresponding to any one of the first to tenth levels with respect to sensor sensitivity is input, the processor of the camera unit may adjust the sensing sensitivity of the sensor (e.g., a photo sensor, an illuminance sensor) based on the second setting value. For example, in case that the second setting value corresponding to the first level is input, the processor of the camera unit may operate only in the presence of strong light greater than or equal to a set reference value, and in case that the second setting value corresponding to the tenth level is input, the processor of the camera unit may continuously operate regardless of the intensity of the light.

In some embodiments, for example, in case that a third setting value corresponding to any one of off, on, or auto with respect to a zoom function, the processor of the camera unit may set the state of the zoom function based on the third setting value. In case that the third setting value corresponding to off is input, the processor of the camera unit may deactivate the operation of the zoom function (e.g., zoom-in capturing). In case that the third setting value corresponding to on is input, the processor of the camera unit may continuously activate the operation of the zoom function. In case that the third setting value corresponding to auto is input, the processor of the camera unit may activate the operation of the zoom function only when the sensor (e.g., a photo sensor or an illuminance sensor) recognizes welding light.

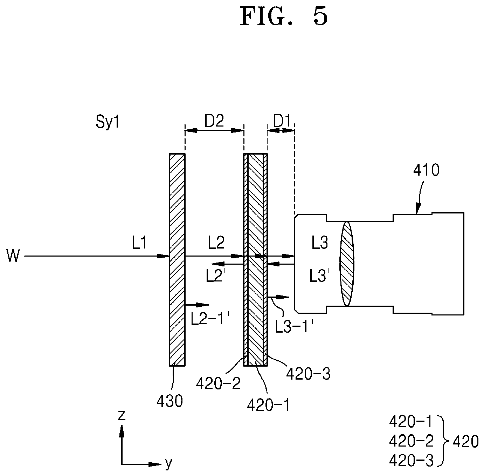

FIGS. 5 to 7 are conceptual diagrams illustrating a configuration example of a camera unit according to an embodiment.

Referring to FIG. 5, a ghost phenomenon may be minimized by reducing pieces of light reflected from anti-reflection coating layers including the first coating 420-2 and the second coating 420-3 arranged on at least one surface of the shading cartridge structure 420 among pieces of welding light having passed through the cover plate 430. L1 is welding light emitted from a light source W

Specifically, by arranging a first coating layer 420-2, an amount of reflected welding light L2' is minimized in case that some of pieces of light L2 transmitted through the cover plate 430 are reflected (L2'), and thus, an amount of welding light L2-1' which reaches the cover plate and is reflected is also minimized, thereby minimizing a primary ghost phenomenon.

In some embodiments, by providing the structure described above, referring to FIG. 5, specifically, by arranging a second coating layer 420-3, an amount of reflected welding light is minimized in a process in which welding light L3 having passed through the shading cartridge structure 420 is reflected (L3') from the camera and is then reflected (L3-1') from another surface of the shading cartridge structure 420, thereby minimizing a secondary ghost phenomenon.

The anti-reflection coating layers 1322a and 1322b according to an embodiment may be formed by a method of forming a layer by applying, drying, and/or curing a coating layer, such as vacuum deposition, sputtering, and/or wet coating. However, the disclosure is not limited to the forming and/or coating methods described above, and any method of forming and/or coating an anti-reflection coating layer should be interpreted as falling within the scope of the disclosure as long as the method may be easily selected by those of ordinary skill in the art.

The anti-reflection coating layers including the first coating 420-2 and the second coating 420-3 according to an embodiment may be formed of and/or coated with, for example, magnesium fluoride (MgF₂), silicon (Si), and silicon dioxide (SiO₂), but the disclosure is not limited to the materials described above. Any material for the anti-reflection coating layers 420-2 and 430-3should be interpreted as falling within the scope of the disclosure as long as the material may be easily selected by those of ordinary skill in the art.

In case that the reflectivity of the anti-reflection coating layers 420-2 and 430-3 according to an embodiment is excessively high, an amount of welding light transmitted through the shading cartridge structure 420 is not sufficient, which deteriorates the sharpness of the image. On the other hand, in case that the reflectivity of the anti-reflection coating layers 420-2 and 430-3 is excessively low, the efficiency of the anti-reflection coating layers 420-2 and 430-3 is reduced, which causes a problem in that a ghost phenomenon is not solved. Therefore, the reflectivity may be set to less than 4 %, or in another example, less than 3.5 % or less than 3.0 %, or in another example, less than 1.0 %.

The refractive index of each of the anti-reflection coating layers 420-2 and 430-3 according to an embodiment may be 1.3 to 1.36.

The anti-reflection coating layers 1322a and 1322b according to an embodiment may include a single layer or multiple layers, and at least two layers among the multiple layers may have different refractive indices.

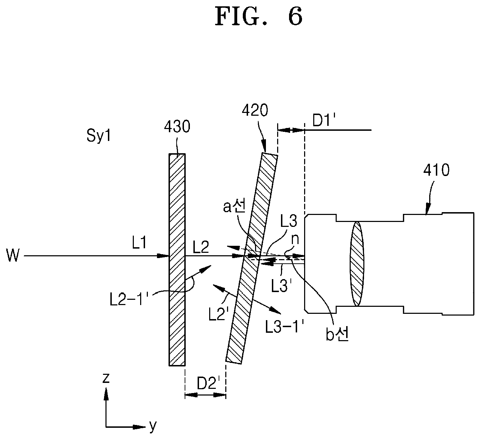

Referring to FIG. 6, a shading cartridge structure 420 according to an embodiment may be configured such that an imaginary first-1 line (line a) perpendicular to the main surface of the shading cartridge structure 420 crosses an imaginary second line (line b) which connects a camera to the light source W. In this case, line b may be, for example, an optical axis.

The term "main surface" as used herein may refer to a widest surface in a film, a film structure, a thin-film, a membrane, or a layer, or a structure having a wide surface similar thereto.

The term "light source" as used herein may refer to an object or a tool which emits light, and for example, may refer to a place where welding is performed or an object which is to be welded and in which welding light is generated.

In case that line b and line a cross each other as in the structure described above, when welding light L2' reflected from a surface of the shading cartridge structure 420 reaches a cover plate 430 and is reflected (L2-1'), the reflected light L2-1' is not directed toward a camera 410, which may minimize the primary ghost phenomenon described above (see FIG. 6).

In case that line b and line a cross each other as in the structure described above, even when welding light L3' reflected from an area of the camera 410 reaches the shading cartridge structure 420 and is reflected (L3-1'), the reflected welding light L3-1' is not directed toward the camera 410, which may minimize the secondary ghost phenomenon described above (see FIG. 6).

According to an embodiment, an angle n formed by line b and line a may be set to be 0 degrees to 10 degrees. The above structure may minimize the ghost phenomenon even in case that welding light is reflected from the cover plate 430 and/or the shading cartridge structure 420.

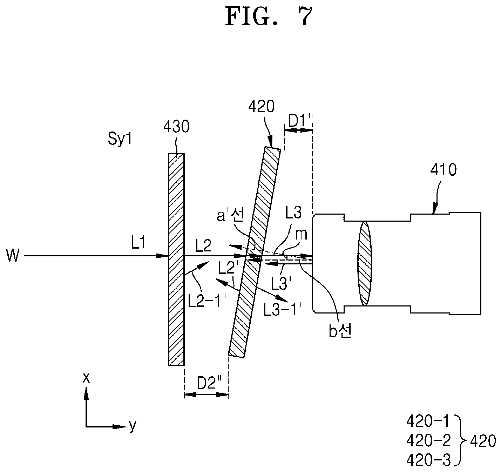

FIG. 6 illustrates a moving path of welding light in a y-z direction showing a lateral direction of the camera 410, and FIG. 7 illustrates a moving path of welding light in a y-x direction showing a vertical direction of a camera 410.

Referring to FIG. 7, a shading cartridge structure 420 according to an embodiment may be configured such that an imaginary first-2 line (line a') perpendicular to the main surface of the shading cartridge structure 420 crosses an imaginary second line (line b) which connects a camera 410 to a light source W. In this case, line a, line a', and line b may cross each other.

For example, an angle m formed by line a' and line b may be determined independently of the angle n formed by line a and line b.

As in the structure described above, by varying the angle between the shading cartridge structure 420 and the camera 410 and/or the cover plate 430, a camera unit capable of minimizing a ghost phenomenon may be provided by taking into account the position where the camera unit is driven, the size of the welding environment, and the like.

Although not illustrated, the camera unit according to an embodiment may further include a control unit (not shown) which controls the angle n formed by line a and line b and/or the angle m formed by line a' and line b. In the camera unit, a path through which welding light enters may vary depending on a location where the capturing unit is arranged. Such a structure may provide an effect of preventing a ghost phenomenon according to a position where the camera unit is used.

The camera unit according to an embodiment may further include a driving unit (not shown) which is arranged at a portion of the shading cartridge structure 420 and adjusts the arrangement angle of the shading cartridge structure 420. For example, the driving range of at least one of the angle n or the angle m may be at least 4 degrees.

For example, the control unit and the driving unit are not particularly limited, and any component capable of controlling an arrangement surface and/or an arrangement angle of a panel and/or a thin plate should be interpreted as falling within the scope of the disclosure as long as the component may be easily selected by those of ordinary skill in the art.

Referring again to FIG. 5, in an embodiment, a distance D1 between a portion of the shading cartridge structure 420 and the camera 410 may be less than a distance D2 between a portion of the shading cartridge structure 420 and the cover plate 430. Referring to FIG. 5, in an optional embodiment, D1 may refer to the distance between the second coating layer 420-3 and the camera 410. In another optional embodiment, D1 may refer to the distance between the second coating layer 420-3 and the lens of the camera 410.

Although not illustrated, in an optional embodiment, a portion of the shading cartridge structure 420 and a portion of the camera 410 may be brought into contact or close contact with each other. In another optional embodiment, a portion of the shading cartridge structure 420 and a portion of the lens of the camera 410 may be brought into contact or close contact with each other. In case that D1 is made small as in the structure described above, an amount of welding light L3' reflected from the camera 410 may be minimized, and thus, a ghost phenomenon may be minimized.

Referring again to FIG. 6, in an embodiment, a minimum distance D1' between a portion of the shading cartridge structure 420 and the camera 410 may be less than a minimum distance D2' between a portion of the shading cartridge structure 420 and the cover plate 430.

Although not illustrated, in an optional embodiment, a portion of the shading cartridge structure 420 and at least a portion of the camera 410 may be brought into contact or close contact with each other. In case that D1' is made small as in the structure described above, an amount of welding light L3' reflected from the camera 410 may be minimized, and thus, a ghost phenomenon may be suppressed.

Referring again to FIG. 7, in an embodiment, a minimum distance D1" between a portion of the shading cartridge structure 420 and the camera 410 may be less than a minimum distance D2" between a portion of the shading cartridge structure 420 and the cover plate 430.

Although not illustrated, in an optional embodiment, a portion of the shading cartridge structure 420 and at least a portion of the camera 410 may be brought into contact or close contact with each other. In case that D1" is made small as in the structure described above, an amount of welding light L3" reflected from the camera 410 may be minimized, and thus, a ghost phenomenon may be suppressed.

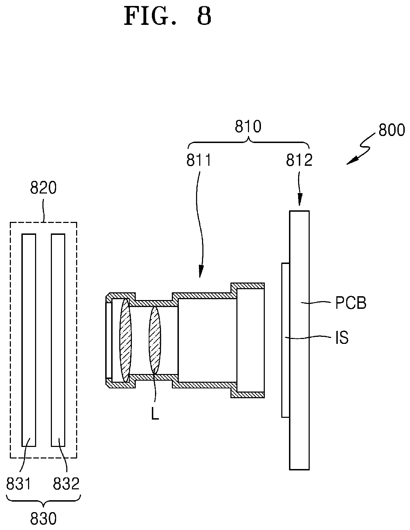

FIG. 8 is a conceptual diagram illustrating another example of a camera unit in a vision sensor system according to an embodiment.

Referring to FIG. 8, a camera unit 800 may include a camera 810 and a shading cartridge structure 820.

The camera 810 may include a lens assembly 811 and a substrate assembly 812.

The lens assembly 811 may include an actuator and one or more lenses accommodated in the actuator. The actuator may include an autofocus actuator and/or a shake compensation actuator. The autofocus actuator and the shake compensation actuator may be integrally provided as a single body.

The substrate assembly 812 may have a structure in which an image sensor IS is coupled on a printed circuit board (PCB) substrate on which a conductive wiring pattern is formed.

The shading cartridge structure 820 may include a filter unit 830.

The filter unit 830 may perform a function of shading welding light generated by a welding work. The camera 810 may use the filter unit 830 to capture a welding image in which a certain amount of welding light is shielded. The filter unit 830 may be positioned in front of the camera 810. Specifically, the filter unit 830 may be positioned in front of the lens which receives light from a subject.

In an embodiment, the filter unit 830 may include a blackening filter 832. The blackening filter 832 may shade welding light generated when a worker welds. For example, the blackening filter 832 may increase the shade of the blackening filter 832 by performing blackening based on welding light information detected by a sensor unit (123 of FIG. 3), for example, an optical sensor. In this case, the blackening filter 832 may include, for example, a liquid crystal protection panel (LCD panel), the blackening density of which may be adjusted according to the alignment direction of liquid crystals. However, the disclosure is not limited thereto, and the blackening filter 832 may be implemented as various panels, including a VA LCD, a TN LCD, and an IPS LCD.

The blackening density of the blackening filter 832 may be automatically adjusted according to the presence or absence of the welding light or the intensity of the welding light. As described above, in case that the blackening density of the blackening filter 832 is automatically adjusted according to the brightness of the welding light, a sensor unit (see the sensor unit 123 of FIG. 3) may be used. The optical sensor of the sensor unit 123 may obtain welding light information by detecting the presence or absence of the welding light or the intensity of the welding light, and may convert information about the intensity of the welding light, which is included in the welding light information, into a certain electrical signal. The sensor unit 123 may transmit the converted electrical signal to the processor (the processor 124 of FIG. 3), and the processor may control the blackening density based on the intensity of the welding light.

For example, the blackening filter 832 may change the shade of the panel in real time to correspond to intensity of light generated from the welding surface at the welding work site, and the camera 810 may capture a welding image in which a certain amount of welding light is shielded by the blackening filter 832 installed on the front side.

In another embodiment, the filter unit 830 may further include a neutral density filter 831. The neutral density filter 831 may reduce the amount of welding light generated when a worker welds and then transmit the welding light to the camera 810. The neutral density filter 831 may reduce the amount of welding light according to a preset neutral density. For example, in case that the neutral density filter 831 with a neutral density of 50 % is applied, the amount of welding light may be reduced more than in case that the neutral density filter 831 with a neutral density of 15 % is applied.

The filter unit 830 may have a structure in which the neutral density filter 831 is replaceable. When necessary, the neutral density filter 831 with a different neutral density may be replaced and used.

In another embodiment, the neutral density filter 831 may be a digital filter, the neutral density of which is controlled by the processor. Like the blackening filter 832, the neutral density filter 831, which is a digital filter, may increase the shade of the neutral density filter 831 by increasing the neutral density based on welding light information detected by the sensor unit 123, for example, the optical sensor.

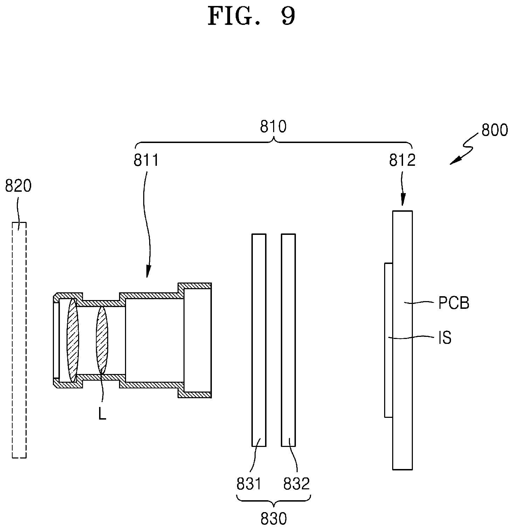

In another embodiment, referring to FIG. 9, a filter unit 830 may be coupled to a camera 810. In this case, a shading cartridge structure 820 may include a liquid crystal protection panel (LCD panel), the blackening density of which may be adjusted, but the disclosure is not limited thereto, and the shading cartridge structure 820 may include a general panel, the blackening density of which is fixed or is not adjusted. Even in this case, a ghost phenomenon may be minimized through an anti-reflection coating layer arranged on a surface of the general panel.

The filter unit 830 may be arranged on a path along which light moves within the camera 810, more specifically, a lens assembly 811. For example, the filter unit 830 may be arranged in front of the lens assembly 811 inside the camera 810 or in front of a shading cartridge structure, but the disclosure is not limited thereto, and the filter unit 830 may be arranged between the lens assembly 811 inside the camera 810 and an image sensor IS and perform a shading function. In other words, the filter unit 830 may form an exterior as a separate housing and may be coupled to the camera 810. The filter unit 830 may be coupled in front of the camera 810 (or, the shading cartridge structure), or may be arranged and coupled between the lens assembly 811 of the camera 810 and the image sensor IS. In another embodiment, the filter unit 830 may be formed integrally with the lens assembly 811 of the camera 810. A blackening filter 832 and a variable neutral density filter 831 of the filter unit 830 may be arranged on an optical axis of a lens L and coupled as a single housing. In this case, the filter unit 830 may be formed in a circular shape which is similar to a shape of the lens L. However, the disclosure is not limited thereto, and the filter unit 830 may be formed in a shape which is different from a shape of the lens L, for example, in a rectangular shape. In this case, the lens assembly 811 may have an internal structure of a housing which may accommodate both the circular lens L and the rectangular filter unit 830.

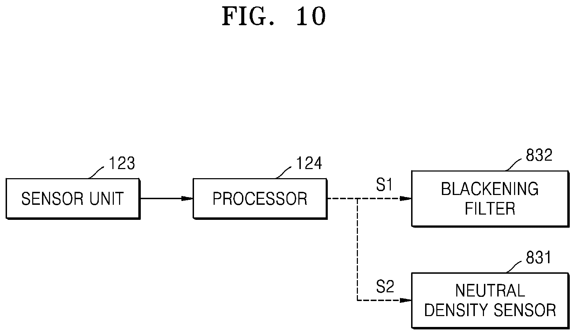

FIG. 10 is a block diagram for describing a method of controlling a filter unit of a camera unit in a vision sensor system, according to an embodiment.

Referring to FIG. 10, the camera unit may obtain information about welding light by a sensor unit 123. In this case, the sensor unit 123 may include an optical sensor (e.g., an illuminance sensor) to detect the presence or absence of the welding light or the intensity of the welding light. The sensor unit 123 may convert the presence or absence of the welding light or the intensity of the welding light into an electrical signal and transmit the electrical signal to a processor 124.

In case that the electrical signal is received from the sensor unit 123, the processor 124 may generate a control signal and transmit the control signal to the filter unit (830 of FIG. 8). In this case, the filter unit 830 may include the blackening filter 832 and the neutral density filter 831, which are controllable. The processor 124 may adjust both the blackening density of the blackening filter 832 and the neutral density filter 831 according to the detected intensity of the welding light. In an embodiment, in case that welding light is detected by the sensor unit 123 and is greater than a preset first intensity, the processor 124 may generate a first control signal S1 and a second control signal S2 and control both the blackening filter 832 and the neutral density filter 831 to operate. In some embodiments, in case that welding light is detected by the sensor unit 123 and is less than a preset first intensity and greater than a preset second intensity, the processor 124 may generate the second control signal S2 and control only the neutral density filter 831, or may generate the first control signal S1 and control only the blackening filter 832.

In some embodiments, in case that welding light is not detected by the sensor unit 123 or is less than the preset second intensity, the processor 124 may transmit the welding light to the camera module (810 of FIG. 8) as it is, without separately controlling the neutral density filter 831 or the blackening filter 832.

As described above, by arranging the filter unit capable of shading welding light in front of the camera, the camera unit in the vision sensor system according to an embodiment may obtain a welding image in which a certain amount of welding light is shielded without processing a separately captured image. In some embodiments, the camera unit may include the blackening filter and the neutral density filter to control the blackening density or the neutral density according to the presence or absence of the welding light or the intensity of the welding light, and thus, the shade may be effectively controlled.

In some embodiments, the processor 124 may further control a sensor filter (not shown) based on the intensity of the welding light detected by the sensor unit 123, so as to adjust the blackening density of the sensor filter. For example, when the detected welding light is greater than the preset first intensity, the processor 124 may control generate a third control signal S3 to control the sensor filter to operate, so that the amount of light transmitted to the sensor unit 123 is reduced.

In an embodiment, the processor 124 may adjust the blackening density of the sensor filter to be equal to the blackening density of the blackening filter 832, based on the intensity of the detected welding light, but the disclosure is not limited thereto, and the processor 124 may adjust the blackening density of the sensor filter to be different from the blackening density of the blackening filter 832. For example, in case that the result of subtracting the preset first intensity from the detected welding light is less than a preset reference value, the processor 124 may adjust the blackening density of the blackening filter 832 to be equal to the blackening density of the sensor filter, and in case that the result of subtracting the preset first intensity from the detected welding light is greater than or equal to the preset reference value, the processor 124 may adjust the blackening density of the sensor filter to be higher than the blackening density of the blackening filter 832.

In an embodiment, the processor 124 may adjust the blackening densities of the blackening filter 832 and the sensor filter based on the intensity of the detected welding light, and may adjust the blackening densities differently based on a size ratio of the sensor filter to the blackening filter 832. For example, as the size ratio of the sensor filter to the blackening filter 832 is smaller, the processor 124 may adjust the blackening density to be lower. In some embodiments, the blackening density of the sensor filter may be controlled by the processor 124, but the disclosure is not limited thereto, and the sensor filter may have a preset blackening density.

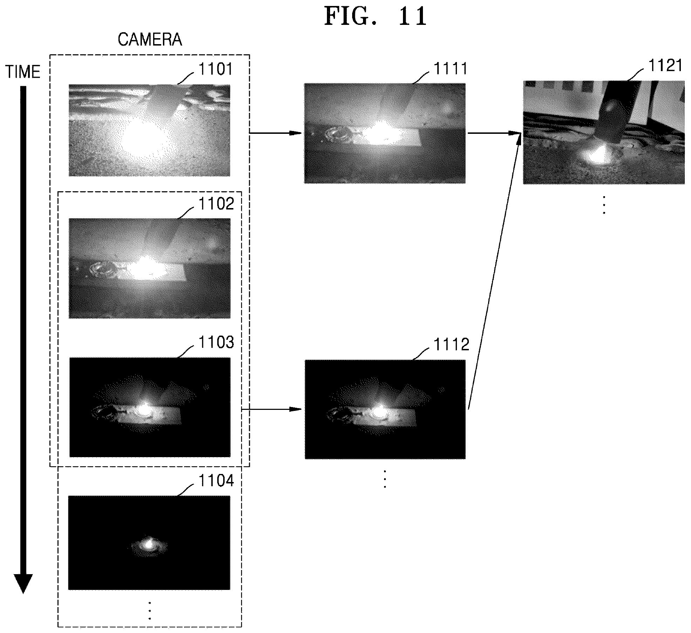

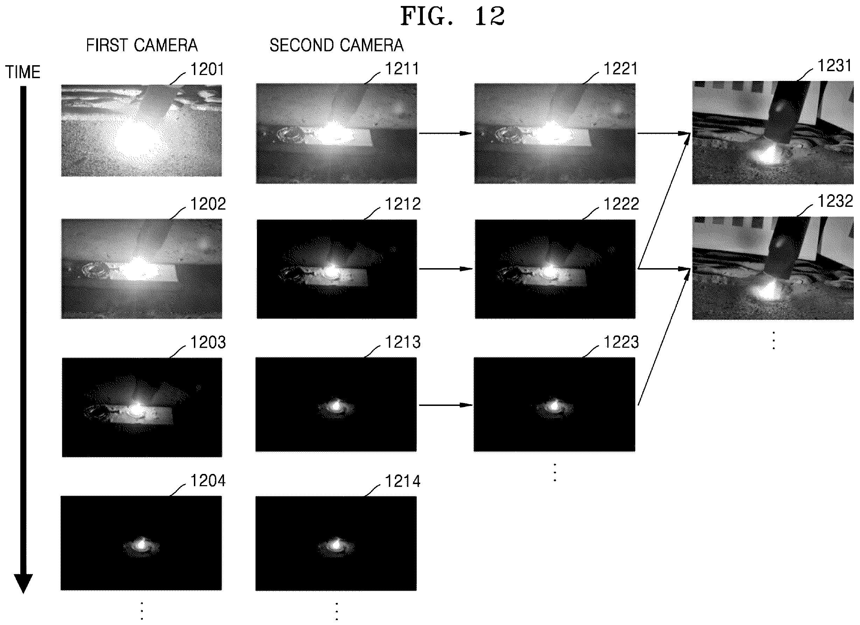

Hereinafter, an example of generating a merged image in a camera unit in a vision sensor system according to an embodiment is described with reference to FIGS. 11 and 12. Each image frame used in the merged image may be an image which does not include a laser irradiated onto a target object.

FIG. 11 is a diagram for describing an example of generating a merged image in the camera unit of the vision sensor system according to an embodiment.

Referring to FIG. 11, the camera unit may obtain a plurality of image frames by using the camera to capture an image of a work area based on set capturing conditions. The capturing conditions may include ISO sensitivity, gain, shutter speed, and the like. The plurality of image frames may include, for example, first to fourth image frames 1101 to 1104 captured at set time intervals.

The processor of the camera unit may select the first to third image frames 1101, 1102, and 1103 from among the plurality of image frames in accordance with a set criterion (e.g., a specified number of image frames, selection of an image frame in which a pixel difference between other image frames (e.g., previous image frames) falls within a set range, etc.), and may generate a first merged preprocessed image 1111 by synthesizing the first to third image frames 1101, 1102, and 1103. The processor of the camera unit may select the second to fourth image frames 1102, 1103, and 1104 from among the plurality of image frames in accordance with a set criterion, and may generate a second merged preprocessed image 1112 by synthesizing the second to fourth image frames 1102, 1103, and 1104. The processor of the camera unit may generate a first merged image 1121 by synthesizing the first merged preprocessed image 1111 and the second merged preprocessed image 1112.

In case that the fifth image frame (not shown) is obtained, the processor of the camera unit may select the third to fifth image frames from among the plurality of image frames and may generate a third merged preprocessed image (not shown) by synthesizing the third to fifth image frames. The processor of the camera unit may generate a second merged image (not shown) by synthesizing the second merged preprocessed image 1112 and the third merged preprocessed image.

In an embodiment, the processor of the camera unit may generate the first merged preprocessed image 1111 and the second merged preprocessed image 1112 in parallel and may also generate the first merged image 1121 and the second merged image in parallel. The processor of the camera unit may perform parallel image synthesis with a difference of one frame to generate a plurality of merged images at the same speed as the speed at which the image frames are captured by the camera.

FIG. 12 is a diagram for describing another example of generating a merged image in the camera unit of the vision sensor system according to an embodiment.

Referring to FIG. 12, the camera unit may obtain a plurality of image frames by using a first camera and a second camera to capture an image of a work area based on set capturing conditions. The first camera and the second camera may capture a welding situation under different capturing conditions in the same time frame. For example, the first camera may capture first to fourth image frames 1201 to 1204 under a first capturing condition, and the second camera may capture first to fourth image frames 1211 to 1214 under a second shooting condition.

In another embodiment, the camera unit may capture a welding situation under the same capturing conditions in the same time frame, and may capture a welding situation under different capturing conditions in different time frames. For example, the first camera and the second camera may respectively capture the first image frame 1201 and the first image frame 1211 under the first capturing condition, and may respectively capture the second image frame 1202 and the second image frame 1212 under the second capturing condition. In some embodiments, the first camera and the second camera may respectively capture the third image frame 1203 and the third image frame 1213 under a third capturing condition. Thereafter, the first camera and the second camera may respectively capture the fourth image frame 1204 and the fourth image frame 1214 again under the first capturing condition.

In an embodiment, the first capturing condition may be set to, for example, a faster shutter speed, higher sensitivity, and a higher gain than the second capturing condition, and the third capturing condition may be set to, for example, a slower shutter speed, lower sensitivity, and a lower gain than the second capturing condition. The capturing conditions are only examples, and the camera may capture an image under various capturing conditions.

The processor of the camera unit may generate a first merged preprocessed image 1221 by synthesizing the first image frame 1201 obtained by the first camera and the first image frame 1211 obtained by the second camera, and may generate a second merged preprocessed image 1222 by synthesizing the second image frame 1202 obtained by the first camera and the second image frame 1212 obtained by the second camera. The processor of the camera unit may generate a first merged image 1231 by synthesizing the first merged preprocessed image 1221 and the second merged preprocessed image 1222. In some embodiments, the processor of the camera unit may generate a second merged image 1232 by synthesizing the second merged preprocessed image 1222 and the third merged preprocessed image 1223.

In an embodiment, the processor of the camera unit may select two or more merged preprocessed images from among the plurality of merged preprocessed images in accordance with a set criterion, and may generate a merged image by synthesizing the selected merged preprocessed images. In this case, the processor of the camera unit may select three merged preprocessed images from among the plurality of merged preprocessed images and may generate a merged image based on the selected three merged preprocessed images. The processor of the camera unit may deselect a merged preprocessed image in which a pixel difference between other image frames (e.g., previous image frames) among the three merged preprocessed images is less than a set minimum value or greater than or equal to a set maximum value.

The camera unit in the vision sensor system according to an embodiment may generate a merged image by synthesizing a plurality of image frames in an HDR scheme through FIGS. 11 and 12, thereby obtaining a high-definition merged image. By providing the high-definition merged image to the external device, there is an effect that easy identifies the surrounding area other than an area adjacent to welding light.

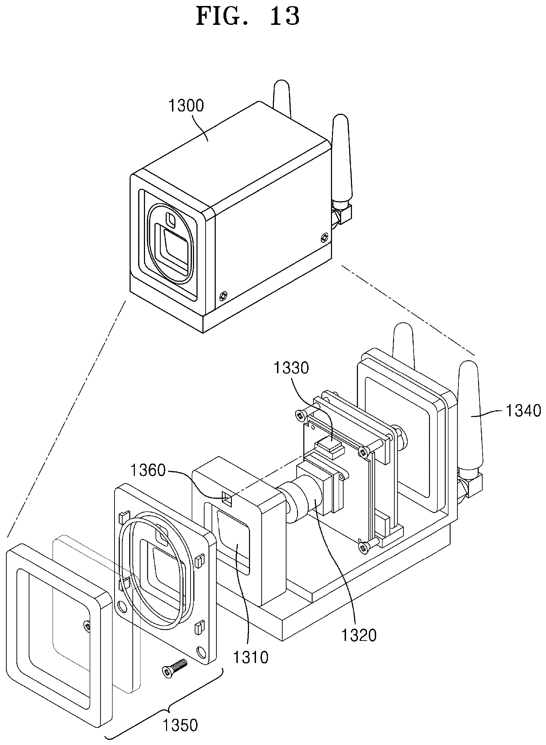

FIG. 13 is an exploded view of a camera unit in a vision sensor system according to an embodiment. In the following description, parts redundant with the description of FIGS. 1 to 12 are omitted.

Referring to FIG. 13, a camera unit 1300 in a vision sensor system according to an embodiment may include a shading unit 1310, a camera 1320, a sensor unit 1330, a communication unit 1340, and a processor (not shown). The communication unit 1340 may include a wireless antenna to support wireless communication with an external device, but the disclosure is not limited thereto, and the communication unit 1340 may also support wired communication via a cable.

The camera unit 1300 may further include a protection module 1350 and a sensor filter 1360.

The protection module 1350 may include a protection glass and a protection frame which protects the front and rear sides of the protection glass. The protection module 1350 may be arranged in front of the shading unit 1310. The protection glass of the protection module 1350 is intended to prevent accidents such as sparks flying during welding work, and a coating layer which may prevent condensation or moisture may be formed on the front surface of the protection glass by using a hydrophilic coating material. The protection module 1350 may prevent the shading unit 1310 from being damaged by external foreign substances.

The sensor filter 1360 may be arranged on a side of the shading unit 1310. In an embodiment, the sensor filter 1360 may be formed separately from the shading unit 1310, or may be formed integrally with the shading unit 1310. The sensor filter 1360 may be arranged on the same line as the sensor unit 1330 arranged on a side of the camera 1320, and may control light incident on the sensor unit 1330.

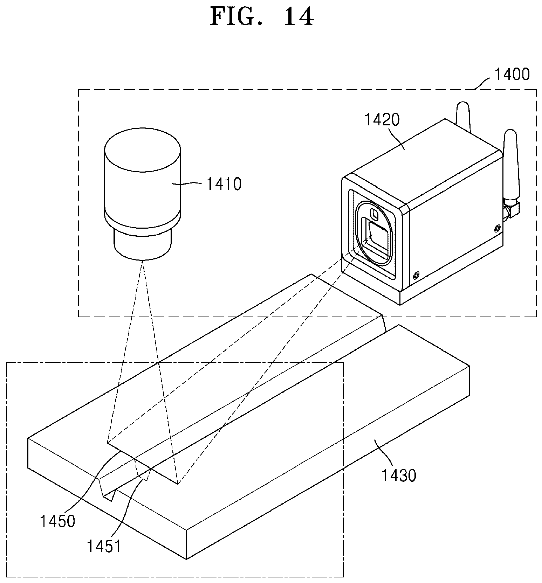

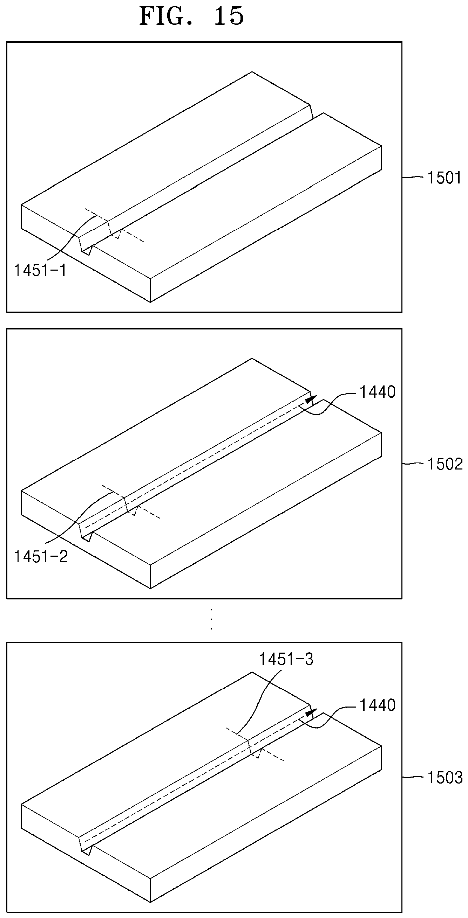

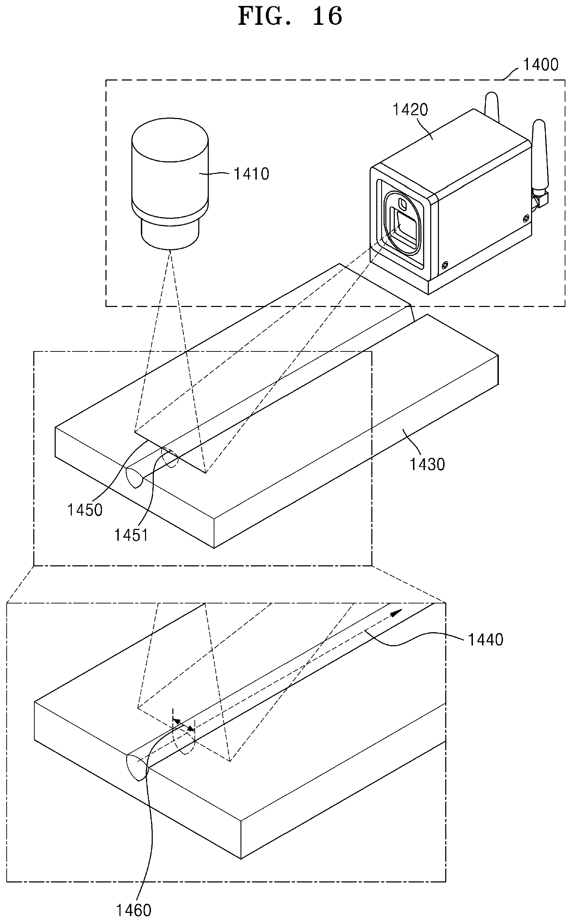

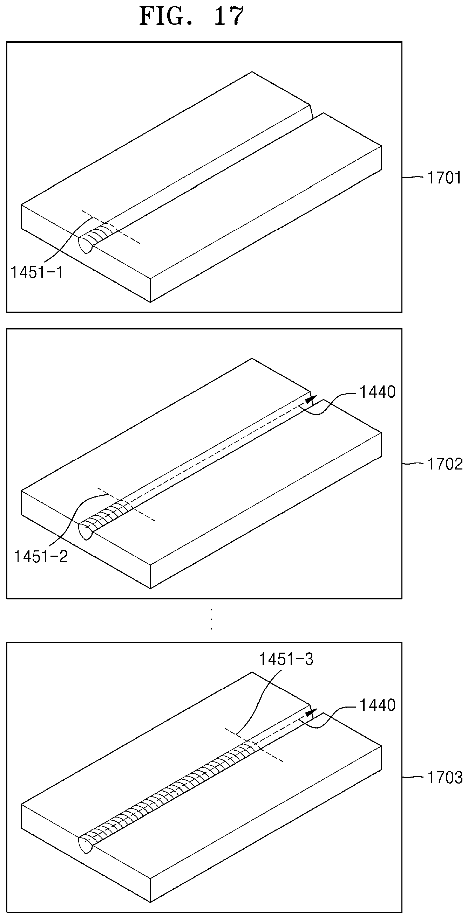

FIG. 14 is a diagram for describing an example of an operation of a vision sensor system according to an embodiment, and FIG. 15 is a diagram for describing an example of generating an image based on a laser line in a vision sensor system according to an embodiment. FIG. 16 is a diagram for describing another example of an operation of a vision sensor system according to an embodiment, and FIG. 17 is a diagram for describing an example of generating another image based on a laser line in a vision sensor system according to an embodiment.

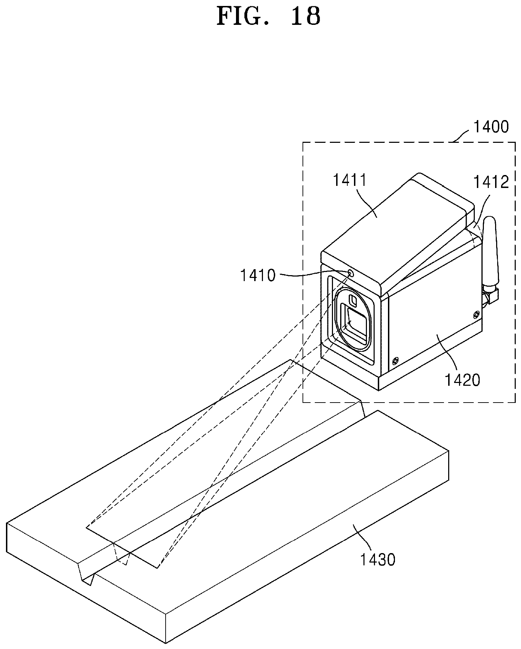

Referring to FIGS. 14 and 15, a vision sensor system 1400 according to an embodiment may include a laser irradiation unit 1410 and a camera unit 1420. In an embodiment, the laser irradiation unit 1410 and the camera unit 1420, which are included in the vision sensor system 1400, may be configured in a separate form because the laser irradiation unit 1410 and the camera unit 1420 enable communication with each other, but the disclosure is not limited thereto. For example, the laser irradiation unit 1410 and the camera unit 1420, which are included in the vision sensor system 1400, may be formed integrally with each other, and a description thereof is provided below with reference to FIG. 18.

The vision sensor system 1400 may irradiate a laser line 1450 through the laser irradiation unit 1410 while moving along an imaginary welding path 1440 for a target object 1430 within a welding area, and may obtain an image frame for the target object through the camera unit 1420, based on the laser line 1450.

The laser irradiation unit 1410 may be a laser projector and may irradiate the laser line 1450 along the imaginary welding path 1440 set on the target object 1430.

The laser line 1450 may be irradiated in a straight-line shape, but the shape of the laser line 1450 may be deformed (1451) according to the surface shape of the target object 1430. The laser line 1450 may be, for example, perpendicular to a set traveling path (e.g., the imaginary welding path 1440), but the disclosure is not limited thereto.

The camera unit 1420 may obtain a plurality of image frames for the target object based on the laser line 1450, for example, first to third image frames 1501, 1502, and 1503 as illustrated in FIG. 15. The first to third image frames 1501, 1502, and 1503 may respectively include laser lines 1451-1, 1451-2, and 1451-3 moving along the imaginary welding path 1440. The second image frame 1502 may be captured after a set interval from the first image frame 1501, and the laser line 1451-2 included in the second image frame 1502 may be positioned at a point moved in the direction of the set traveling path (e.g., the imaginary welding path 1440) based on the distance the vision sensor system 1400 has moved during the set interval relative to the laser line 1451-1 included in the first image frame 1501. Accordingly, in case that two or more image frames are synthesized, the synthesized image frame (e.g., a merged preprocessed image, a merged image, etc.) may include a three-dimensional laser line in which laser lines based on the surface shape of the target object 1430 (laser lines deformed based on the surface shape) are accumulated. The three-dimensional laser line enables the camera unit 1420 to detect a three-dimensional surface shape (e.g., a rectangular groove, a top width, bottom width, depth of the rectangular groove, etc.) of the target object 1430.

In an embodiment, the camera unit 1420 may generate one or more merged images based on two or more image frames selected from among the plurality of image frames in accordance with a set criterion. In this case, the camera unit 1420 may generate a plurality of merged preprocessed images based on two or more image frames selected from among the plurality of image frames in accordance with a set criterion, and may synthesize the plurality of merged preprocessed images to generate one or more merged images.

Referring to FIGS. 14 and 15, an example of obtaining the plurality of image frames when the rectangular groove is formed in the target object 1430 has been described, but the surface shape formed in the target object 1430 is not limited to the rectangular groove. For example, in case that the camera unit 1420 irradiates a laser line in the direction of the imaginary welding path 1440 according to the shape of a bead formed on the target object 1430 during the welding process, as illustrated in FIG. 16, the camera unit 1420 may obtain a plurality of image frames 1701, 1702, and 1703 for the target object 1430 on which the bead is formed, and may detect the shape of the bead based on the shapes of the laser lines 1451-1, 1451-2, and 1451-3 within the plurality of image frames 1701, 1702, and 1703, as illustrated in FIG. 17.

The camera unit 1420 may generate a merged image based on the plurality of image frames 1701, 1702, and 1703, may detect the bead and the laser lines 1451-1, 1451-2, and 1451-3 from the merged image (or the image frame, the merged preprocessed image, etc.), and may detect the size of the bead formed on the target object 1430 based on the shape of the laser line corresponding to the shape of the bead. The size of the bead may include a top width 1460 of the bead, but the disclosure is not limited thereto. For example, the size of the bead may include a top circumference of the bead, a top height of the bead relative to the surface of the target object, etc. In case that the size of the bead detected from a set number or more of merged images (or image frames, merged preprocessed images, etc.) is out of a set size range (or in case that the size of the bead detected continuously a set number of times or more is out of a set size range), the camera unit 1420 may determine that a welding defect has occurred in the target object 1430.

In an embodiment, the camera unit 1420 may detect, from a plurality of merged images (or image frames, merged preprocessed images, etc.), a three-dimensional laser line in which laser lines according to the shape of the bead (laser lines modified according to the shape of the bead) are accumulated, and may detect a bead line formed on the target object based on the shape of the laser line corresponding to the shape of the bead, and in case that the detected bead line is out of a set bead line range, may determine that a welding defect has occurred on the target object 1430.

The vision sensor system 1400 according to an embodiment may identify information about a shape of a welding bead, welding arc, and an surrounding environment other than an area adjacent to welding light by transmitting, to the external device, the merged image generated by the camera unit 1420 as the high-definition image.

In some embodiments, the vision sensor system 1400 according to an embodiment may identify the shape of the bead by transmitting, to the external device, the merged image including the laser line corresponding to the shape of the bead, and may easily recognize the presence or absence of a welding defect by transmitting, to the external device, information about the presence or absence of the welding defect based on the bead line or the size of the bead.

FIG. 18 is a diagram illustrating another example of a vision sensor system according to an embodiment.

Referring to FIG. 18, a vision sensor system 1400 may include a laser irradiation unit 1410 and a camera unit 1420. The laser irradiation unit 1410 and the camera unit 1420, which are included in the vision sensor system, may be formed integrally with each other. In an embodiment, for example, the vision sensor system 1400 may be implemented in a form in which an angle-adjustable laser irradiation unit is inserted into a side of the camera unit 1420. For example, as illustrated in FIG. 18, the vision sensor system 1400 may be implemented in a form in which a laser module 1411 including the laser irradiation unit 1410 is stacked on the upper end of the camera unit 1420. In this case, the laser irradiation unit 1410 and a camera of the camera unit 1420 may be arranged to face the same direction.

In an embodiment, in case that the laser module 1411 is implemented in the form of being stacked on the upper end of the camera unit 1420, a side of the laser module 1411 and a side of the camera unit 1420 may be implemented in the form of, for example, a hinge and connected to each other. For example, a side of the laser module 1411 (e.g., a side where the laser irradiation unit 1410 is arranged) and a side of the camera unit 1420 (e.g., a side where the camera is arranged) may be formed in a folding structure so as to be movable in a direction (e.g., a vertical direction).

In some embodiments, another side of the laser module 1411 and another side of the camera unit 1420 may be separated and spaced apart from each other. In an embodiment, a separation distance formed between the other side of the laser module 1411 and the other side of the camera unit 1420 may be changed by a length-adjustable angle adjuster 1412. As the laser module 1411 moves in a direction (e.g., a vertical direction) because the other side of the laser module 1411 and the other side of the camera unit 1420 are spaced apart from each other, the irradiation angle (direction) of the laser line of the laser irradiation unit 1410 arranged in the laser module 1411 may be adjusted.

The irradiation angle of the laser line of the laser irradiation unit 1410 may correspond to the separation distance between the other side of the laser module 1411 and the other side of the camera unit 1420. In this case, for example, the separation distance may be changed by the operation of the angle adjuster 1412 which is controlled by the processor of the camera unit 1420, or may be changed by the control by a manager. In an embodiment, for example, the processor of the camera unit 1420 may control the operation of the angle adjuster 1412 to change the separation distance between the other side of the laser module 1411 and the other side of the camera unit 1420, based on the position at which the laser line is irradiated onto the target object 1430 within the welding area (or the angle at which the laser line is irradiated onto the surface of the target object).

According to an embodiment, a vision sensor system may obtain an image by capturing an image of a welding area where a laser line is irradiated along a welding path through a camera unit including a shading cartridge structure which controls light entering a camera and may transmit the image to an external device, allowing welding beads, welding arc, surrounding environment, etc. to be identified together with the laser line through the image.

According to an embodiment, in case that a welding arc is not detected for a set period of time in an image obtained by a camera, a state of a welder may be identified by providing welding arc non-detection information to an external device.

According to an embodiment, whether a welding defect has occurred in a target object is determined based on an image obtained by a camera and is provided to an external device, allowing a welding defect to be recognized in real time, and, in case that the external device is a welding robot, a welding defect in a target object is minimized by stopping a welding process or changing welding process conditions, based on whether welding defect has occurred in the target object.

According to an embodiment, a high-definition welding image capable of clearly showing a welding surrounding environment is generated and provided by processing an image obtained by a camera, based on HDR technology.

According to an embodiment, unnecessary light reflected from a camera is prevented from entering the camera again by adjusting a slope of a shading cartridge structure inside a camera unit, which limits a ghost phenomenon that may occur due to unnecessary light when generating a welding image.

In addition, according to an embodiment, a blackening filter and a neutral density filter are provided inside a camera unit to control a blackening density or a neutral density according to the presence or intensity of welding light, and thus, a welding image with a certain amount of welding light shielded is provided without processing a separately captured welding image.

The effects of the disclosure are not limited to those described above, and other effects that are not described herein will be clearly understood from the description of the claims by those of ordinary skill in the art.

The embodiments described above may be implemented in the form of a computer program which may be executed through various elements on a computer, and such a computer program may be recorded on a computer-readable medium. At this time, the medium may include a magnetic medium such as hard disk, floppy disk, and magnetic tape, an optical recording medium such as compact disc read-only memory (CD-ROM) and digital versatile disc (DVD), a magneto-optical medium such as floptical disks, and hardware devices specially configured to store and execute program instructions, such as read-only memory (ROM), random access memory (RAM), and flash memory.

The computer program may be specially designed and configured for the disclosure or may be known and available to those of ordinary skill in the art of computer software. Examples of the computer program may include not only machine language code generated by a compiler but also high-level language code that is executable using an interpreter or the like by a computer.

The use of the term "the" and similar demonstratives in the context of describing the present specification (especially in the context of the claims) is to be construed to cover both the singular and the plural. In addition, when a range is described in the disclosure, it includes the invention to which individual values within the range are applied (unless otherwise indicated herein). This is the same as stating each individual value constituting the above range in the detailed description of the disclosure.

Operations constituting methods according to the disclosure may be performed in any suitable order unless otherwise indicated herein or otherwise clearly contradicted by context. The disclosure is not necessarily limited by the order of operations. The use of any and all examples or exemplary terms (e.g., "such as") provided herein is simply intended to describe the disclosure in detail, and the scope of the disclosure is not limited by the examples or exemplary terms unless otherwise claimed. In addition, it will be understood by those of ordinary skill in the art that various modifications, combinations and changes may be made according to design conditions and factors within the scope of the appended claims or equivalents thereof.

Therefore, it will be understood that the spirit of the disclosure should not be limited to the embodiments described above, and the claims and all equivalent modifications fall within the scope of the disclosure.

## Claims

1. A vision sensor system comprising:
a laser irradiation unit configured to irradiate a laser along an imaginary welding path set on a target object; and
a camera unit configured to obtain a plurality of image frames for the target object based on the laser and generate one or more merged images, based on two or more image frames selected from among the plurality of image frames in accordance with a set criterion.

2. The vision sensor system of claim 1, further comprising a control unit configured to determine whether a welding defect has occurred in the target object, based on the one or more merged images, and output a determination result.

3. The vision sensor system of claim 2, wherein the merged image comprises the laser moving along the imaginary welding path, and
the control unit is further configured to detect information about a bead formed on the target object from the merged image, based on a shape of the laser according to a shape of the bead, and determine whether a welding defect has occurred in the target object, based on a result of analyzing the information about the bead.

4. The vision sensor system of claim 1, wherein the camera unit comprises:
a shading unit having a shading cartridge structure arranged between a camera and a light source and configured to control light entering the camera;
a capturing unit having the camera configured to obtain the plurality of image frames; and
a processor configured to generate a plurality of merged preprocessed images, based on two or more image frames selected from among the plurality of image frames in accordance with the set criterion, and generate the one or more merged images by synthesizing the plurality of merged preprocessed images.

5. The vision sensor system of claim 4, wherein the shading cartridge structure comprises a blackening filter and an anti-reflection coating layer arranged on at least one surface of the blackening filter.

6. The vision sensor system of claim 5, wherein the shading cartridge structure further comprises a neutral density filter arranged in front of the blackening filter.

7. The vision sensor system of claim 4, wherein the shading cartridge structure is arranged so that an imaginary line perpendicular to a main surface of the shading cartridge structure crosses an imaginary line which connects a lens of the camera and the light source.
